# EUROPÄISCHE PATENTSCHRIFT

(11) **EP 1 414 642 B1**
(45) Veröffentlichungstag und Bekanntmachung des Hinweises auf die Patenterteilung: **11.01.2006**
(21) Anmeldenummer: 02751125.2
(22) Anmeldetag: 10.07.2002
(51) Int. Cl.: B32B 15/01, B32B 15/02

(54) **WÄRMETAUSCHER MIT EINER DOPPELLAGIGEN WANDUNG AUS KUPFER UND TITAN**
HEAT EXCHANGER HAVING A DOUBLE WALL FROM COPPER AND TITANIUM
ECHANGEUR THERMIQUE DOTE D'UNE PAROI DOUBLE COUCHE EN CUIVRE ET EN TITANE

(30) Priorität: 07.08.2001 DE 10137933; 07.09.2001 DE 10143836
(43) Veröffentlichungstag der Anmeldung: 06.05.2004
(73) Patentinhaber: Deutsche Titan GmbH, 45143 Essen (DE)
(72) Erfinder: SIBUM, Heinz, 45257 Essen (DE)
(74) Vertreter: Knauf, Rudolf
(86) Internationale Anmeldenummer: PCT/EP2002/007659
(87) Internationale Veröffentlichungsnummer: WO 2003/013847

(56) Entgegenhaltungen:
- GB-A- 2 151 744
- US-A- 4 780 374
- PATENT ABSTRACTS OF JAPAN vol. 013, no. 011 (C-558), 11. Januar 1989 (1989-01-11) & JP 63 219555 A (FURUKAWA ELECTRIC CO LTD:THE), 13. September 1988 (1988-09-13)
- PATENT ABSTRACTS OF JAPAN vol. 013, no. 161 (M-815), 18. April 1989 (1989-04-18) & JP 63 317334 A (FURUKAWA ELECTRIC CO LTD:THE), 26. Dezember 1988 (1988-12-26)
- PATENT ABSTRACTS OF JAPAN vol. 010, no. 375 (M-545), 13. Dezember 1986 (1986-12-13) & JP 61 168797 A (SUMITOMO LIGHT METAL IND LTD), 30. Juli 1986 (1986-07-30)
- PATENT ABSTRACTS OF JAPAN vol. 015, no. 443 (M-1178), 12. November 1991 (1991-11-12) & JP 03 189071 A (KOBE STEEL LTD), 19. August 1991 (1991-08-19)
- PATENT ABSTRACTS OF JAPAN vol. 010, no. 142 (M-481), 24. Mai 1986 (1986-05-24) & JP 61 001416 A (SUMITOMO KEIKINZOKU KOGYO KK), 7. Januar 1986 (1986-01-07)

## Beschreibung

Die Erfindung betrifft einen Wärmetauscher, dessen mit biologische Organismen enthaltende Flüssigkeiten als Kühlmedium beaufschlagbare Wandung aus einer dem Kühlmedium zugewandten Kupferlegierungslage und einer daran fest anliegenden, dem Kühlmedium abgewandten Titan- oder Titanlegierungslage besteht.

Wärmetauscher dieser Art in Form von Rohren sind bekannt (GB 2 151 744 A). Bei diesem bekannten Wärmetauscher sind die Wandungen der Rohre doppellagig, wobei das Innenrohr aus Kupfer oder einer Kupferlegierung und das Außenrohr aus Titan bestehen. Beide Rohre haben die gleiche Wanddicke von 0,5 mm. Um das eingeschobene Innenrohr mit dem Außenrohr vollflächig in Kontakt zu bringen, wird das Innenrohr hydraulisch expandiert.

Die Entwicklung eines solchen Wärmetauschers aus Rohren mit doppellagigen Wandungen basiert auf der Erfahrung, dass Titan zwar einen hervorragenden Korrosionsschutz bietet, beim Kontakt mit biologische Organismen enthaltenden Flüssigkeiten, wie Meerwasser oder Brackwasser, als Kühlmedium, sich aber an seiner Kontaktfläche auf Grund der ausgeprägten Biokompatibilität des Titans die biologischen Organismen absetzen bzw. anlagern (Biofouling). Dadurch wird der Wärmeübergang beeinträchtigt. In Extremfällen kann es sogar dazu kommen, dass sich der Wärmetauscher zusetzt. Wird dagegen das Titanrohr innenseitig mit einem Kupferrohr ausgekleidet, dann treten diese Nachteile nicht auf, weil Kupfer toxisch gegenüber biologischen Organismen wirkt. Nachteilig ist dann jedoch, dass das Kupfer oder die Kupferlegierung nur einen schwachen Korrosionsschutz gegenüber aggressiven Medien wie Seewasser hat (0,5 mm/Jahr Abnutzung) und der Wärmeübergang vom inneren Kupferrohr auf das äußere Titanrohr an der Grenze zwischen Kupferrohr und Titanrohr mehr oder weniger auch dann noch gestört ist, wenn beide Rohre fest aneinander liegen (hoher Wärmeübergangswider-stand).

Darüber hinaus ist ein Rohrbündelwärmetauscher (multitubular heat exchanger) bekannt, bei dem die aus Titan bestehenden Rohre mit einer Rohraufnahmeplatte (tube plate) aus einer Kupferlegierung verbunden sind (JP 60 11 70 99 A). Im Falle einer Betriebsunterbrechung des Wärmetauschers wird die Wasserzirkulation unterbrochen, so daß der bei regulärem Betrieb wirksame Schutz gegen elektrische Korrosion zwischen den unterschiedlichen Metallen der Rohre (Titan) und der Rohraufnahmeplatte (Kupferlegierung) nicht mehr wirksam ist. Um die unerwünschte elektrische Korrosion an dieser Stelle zu verhindern, sind auf der Oberfläche der Titanrohre Opferelektroden angeordnet, welche in engem und elektrisch leitendem Kontakt mit den Titanrohren stehen und aus der gleichen Kupferlegierung bestehen wie die Rohraufnahmeplatte. Bei Unterbrechung der Wasserzirkulation findet die dann auftretende elektrische Korrosion nur zwischen den Titanrohren und den Opferelektroden statt. Die unerwünschte elektrische Korrosion zwischen den Rohren und der Rohraufnahmeplatte wird dagegen verhindert. Die Opferelektroden werden bei Bedarf erneuert, so daß ein permanenter Schutz vor elektrischer Korrosion zwischen den Titanrohren und der Rohraufnahmeplatte gewährleistet ist.

Der Erfindung liegt die Aufgabe zugrunde, einen Wärmetauscher zu schaffen, der für den Betrieb mit agressiven, biologische Organismen (Biofouling) enthaltende Flüssigkeiten als Kühlmedium geeignet ist. Insbesondere soll der Wärmeübergang auf Dauer ohne Wartungsarbeiten optimal sein.

Diese Aufgabe wird mit einem Wärmeaustauscher der eingangs genannten Art dadurch gelöst, dass die beiden Lagen über eine Kupfer/Titan-Grenzschicht stoffschlüssig miteinander verbunden sind. Insbesondere handelt es sich bei dieser stoffschlüssigen Verbindung um eine Kupfer/Titan-Legierungsschicht, die sich vorzugsweise bis an die dem aggressiven Kühlmedium ausgesetzte Oberfläche erstreckt.

Bei dem erfindungsgemäßen Wärmetauscher kann es wegen der dem Kühlmedium ausgesetzten Kupfer- bzw. Kupferlegierungslage nicht zu einem Absetzen bzw. Anlagern von biologischen Organismen (Biofouling) kommen. Wegen des korrosionsunanfälligen Titans, das mit dem Kupfer vorzugsweise bis an die dem Kühlmedium ausgesetzten Oberfläche legiert ist, ist auch ein guter Korrosionsschutz vor einem aggressiven, korrodierenden Kühlmedium gegeben. Wegen der stoffschlüssigen Kupfer- Titan-Grenzschicht, insbesondere der Legierungsschicht, ist auch ein guter Wärmeübergang von der dem Kühlmedium ausgesetzten Oberfläche der Wandung bis auf deren abgewandte Oberfläche gewährleistet. Im Ergebnis zeichnet sich deshalb das Flachprodukt und der daraus hergestellte Wärmetauscher durch einen hohen Wirkungsgrad und Wartungsfreiheit aus.

Gegenstand der Erfindung ist ferner ein Verfahren zum Herstellen eines Wärmetauschers der erfindungsgemäßen Art, das darin besteht, dass ein Band aus einem Titanwerkstoff mit einem insbesondere dünneren Band aus Kupferwerkstoff plattiert wird und aus dem so erhaltenen Verbundband Platten oder Rohre geformt und zu Wärmetauschern gefügt werden, wobei das Verbundband vor oder nach dem Formen zu Platten oder Rohren zur Bildung einer Legierungsschicht zwischen den beiden Werkstoffen wärmebehandelt wird.

Bei einem solchen Verfahren entsteht die stoffschlüssige Verbindung in Form einer Legierungsschicht bei der Wärmebehandlung. Die Wärmebehandlung hat darüber hinaus den Effekt des Weichglühens vor allem in dem durch das Plattieren verfestigten Titanwerkstoff. Das Weichglühen ist insbesondere dann von Vorteil, wenn es gilt, das Verbundband einer stärkeren Verformung bei der Herstellung des Wärmetauschers zu unterwerfen.

Soweit das Verbundband nach dem Plattieren trotz einer gewissen Kaltverfestigung noch eine ausreichende Umformbarkeit aufweist, können unmittelbar nach dem Plattierschritt geeignete Blechzuschnitte abgetafelt und daraus Rohre für Röhrenwärmetauscher geformt werden. Die für die Ausbildung der Legierungsschicht notwendige Wärmebehandlung kann in diesem Fall dann am fertig geformten Rohr erfolgen.

Ist die Kaltverfestigung des Verbundbandes nach dem Plattierschritt zu groß und damit keine ausreichende Umformbarkeit des Verbundbandes mehr gegeben, um weitere Umformschritte durchzuführen, dann muss zunächst ein Weichglühen des Verbundbandes z.B. im Durchlaufverfahren erfolgen, bei dem dann auch die Legierungsschicht gebildet wird. Anschließend kann die weitere Umformung z.B. zu Rohren durchgeführt werden.

Es ist besonders vorteilhaft, das Weichglühen und die für die Ausbildung der Legierungsschicht erforderliche Wärmebehandlung in einem Schritt, d.h. gleichzeitig durchzuführen. Soll das Verbundband nach einer solchen Doppeleffekt-Wärmebehandlung noch weiter umgeformt werden, so muss gewährleistet sein, dass die dann vorliegende Kupfer/Titan-Legierungsschicht eine ausreichende Duktilität besitzt, um die Umformung ohne Beschädigungen (z.B. Abplatzungen) mitmachen zu können. Um dies zu erreichen, kann die Kupferfolie im Verhältnis zum Titan-Trägerband ausreichend dünn dimensioniert sein, so dass sich keine zu dicke spröde Legierungsschicht ausbildet.

In diesem Sinne ist nach einer weiteren Ausgestaltung der Erfindung vorgesehen, dass die Materialdicke der dem Kühlmedium abgewandten Lage, also der des Titans oder der Titanlegierung ein Vielfaches von der der dem Kühlmedium zugewandten Lage, also der des Kupfers oder der Kupferlegierung beträgt. Vorzugsweise hat die Kupferlage eine Materialdicke von 0,05 bis 0,2 mm und die Titanlage eine Materialdicke von 0,2 bis 2,0 mm. Bei dieser Dimensionierung ist die Durchlegierung der dem Kühlmedium zugewandten Lage ohne Probleme zu erreichen.

Die Wärmebehandlung erfolgt vorzugsweise in einer Inertgasatmosphäre bei einer Temperatur von 800°C bis 1000° C. Eine Wärmebehandlungsdauer von 5 bis 15 Minuten ist ausreichend, um die Legierungsbildung und das Weichglühen zu bewirken. Vorzugsweise erfolgt die Wärmebehandlung im Durchlauf am Verbundband, aus dem Zuschnitte für die Platten bzw. Bänder für die Rohre der Wärmetauscher hergestellt werden.

Die Herstellung eines Verbundbandes für die Platten eines Plattenwärmetauschers oder die Bänder eines Röhrenwärmetauschers erfolgt in der Weise, dass auf ein Band aus Titan oder einer Titanlegierung mit einer Dicke von vorzugsweise 0,4 bis 1,0 mm eine Folie aus Kupfer mit einer Dicke von vorzugsweise 0,1 mm aufplattiert wird. Es können die üblichen Plattierungstechniken Anwendung finden, insbesondere das Walzplattieren. Durch das Plattieren wird erreicht, dass die Kupferfolie mechanisch fest mit dem Titanband verbunden ist. Ein solches Verbundband wird dann einer gezielten Wärmebehandlung unterworfen, insbesondere läuft das Band durch einen Glühofen. Im Glühofen herrscht eine Inertgasatmosphäre. Die Behandlungstemperatur liegt vorzugsweise zwischen 800°C und 1000°C. Die Bandgeschwindigkeit beträgt 5 bis 20 m/Minute. Bei entsprechend gestaltetem Durchlaufweg ergeben sich dann Behandlungszeiten von 5 bis 15 Minuten. Diese Art von Wärmebehandlung bewirkt zum einen, dass das beim Walzplattieren stark kaltverfestigte Material weichgeglüht wird, und zum anderen, dass sich durch Legierung von Kupfer und Titan nicht nur eine stoffschlüssige Grenzschicht bildet, die für einen guten Wärmeübergang von der Kupfer/Titan-Lage auf die Titanlage sorgt, sondern sich auch ein hervorragender Korrosionschutz ergibt.

## Patentansprüche

1. Wärmetauscher, dessen mit biologische Organismen enthaltende Flüssigkeiten als Kühlmedium beaufschlagte Wandung aus einer dem Kühlmedium zugewandten Kupferlegierungslage und einer daran anliegenden, dem Kühlmedium abgewandten Titan- oder Titan-Legierungslage besteht, **dadurch gekennzeichnet, dass** die KupferLegierungslage aus einer Kupfer/Titan-Legierung besteht und die beiden Lagen über eine Kupfer/Titan-Grenzschicht stoffschlüssig miteinander verbunden sind.

2. Wärmetauscher nach Anspruch 1, **dadurch gekennzeichnet, dass** die Materialdicke der dem Kühlmedium abgewandten Lage ein Vielfaches gegenüber der der dem Kühlmedium zugewandten Lage beträgt.

3. Wärmetauscher nach Anspruch 2, **dadurch gekennzeichnet, dass** die dem Kühlmedium zugewandte Lage eine Materialdicke von 0,05 bis 0,2 mm und die dem Kühlmedium abgewandte Lage eine Materialdicke von 0,2 bis 2,0 mm hat.

4. Verfahren zum Herstellen eines Wärmetauschers nach Anspruch 1, **dadurch gekennzeichnet, dass** ein Band aus einem Titanwerkstoff mit einem Band aus Kupferwerkstoff plattiert wird und aus dem so erhaltenen Verbundband Platten oder Rohre geformt und zu Wärmetauschern gefügt werden, wobei das Verbundband vor oder nach dem Formen zu Platten oder Rohren zur Bildung einer Legierungsgrenzschicht zwischen den beiden Werkstoffen wärmebehandelt wird.

5. Verfahren zum Herstellen eines Wärmetauschers nach Anspruch 4, **dadurch gekennzeichnet, dass** die Wärmebehandlung in einer Inertgasatmosphäre bei einer Temperatur von 800°C bis 1000°C erfolgt.

6. Verfahren zum Herstellen eines Wärmetauschers nach Anspruch 4 oder 5, **dadurch gekennzeichnet, dass** die Wärmebehandlung für eine Dauer von 5 bis 15 Minuten erfolgt.

7. Verfahren zum Herstellen eines Wärmetauschers nach einem der Ansprüche 4 bis 6, **dadurch gekennzeichnet, dass** die Wärmebehandlung im Durchlauf am Verbundband erfolgt.

## Claims

1. A heat exchanger, the wall of which that is exposed to cooling mediums in the form of liquids containing biological organisms consists of a copper alloy layer that faces the cooling medium and an adjoining titanium or titanium alloy layer that faces away from the cooling medium,
**characterized in that**
the copper alloy layer consists of a copper/titanium alloy, and **in that** the two layers are integrally connected to one another by means of a copper/titanium boundary layer.

2. The heat exchanger according to Claim 1,
**characterized in that**
the material thickness of the layer that faces away from the cooling medium amounts to a multiple of the material thickness of the layer that faces the cooling medium.

3. The heat exchanger according to Claim 2,
**characterized in that**
the material thickness of the layer that faces the cooling medium lies between 0.05 and 0.2 mm, and **in that** the material thickness of the layer that faces away from the cooling medium lies between 0.2 and 2.0 mm.

4. A method for manufacturing a heat exchanger according to Claim 1,
**characterized in that**
a strip of a titanium material is plated with a strip of a copper material, and **in that** plates or tubes are shaped of the thusly produced composite strip and joined such that heat exchangers are obtained, wherein the composite strip is subjected to a heat treatment before or after the plates or tubes are shaped in order to form an alloy boundary layer between the two materials.

5. The method for manufacturing a heat exchanger according to Claim 4,
**characterized in that**
the heat treatment takes place in an inert gas atmosphere at a temperature between 800 °C and 1000 °C.

6. The method for manufacturing a heat exchanger according to Claim 4 or 5
**characterized in that**
the heat treatment is carried out for a duration between 5 and 15 minutes.

7. The method for manufacturing a heat exchanger according to one of Claims 4 - 6,
**characterized in that**
the heat treatment of the composite strip is carried out in the form of a continuous operation.

## Revendications

1. Echangeur de chaleur, dont la paroi qui est exposée à des liquides contenant des organismes vivants comme agent de refroidissement, comprend une couche d'alliage de cuivre tournée vers l'agent de refroidissement et une couche de titane ou d'alliage de titane contiguë à celle-ci du côté opposé à l'agent de refroidissement, **caractérisé en ce que** la couche d'alliage de cuivre comprend un alliage de cuivre/titane, et **en ce que** les deux couches sont reliées d'une pièce l'une à l'autre au moyen d'une couche limite de cuivre/titane.

2. Echangeur de chaleur selon la revendication 1, **caractérisé en ce que** l'épaisseur de matériau de la couche opposée à l'agent de refroidissement est un multiple de celle de la couche tournée vers l'agent de refroidissement.

3. Echangeur de chaleur selon la revendication 2, **caractérisé en ce que** l'épaisseur de matériau de la couche tournée vers l'agent de refroidissement se situe entre 0,05 et 0,2 mm, et celle de la couche opposée à l'agent de refroidissement se situe entre 0,2 et 2,0 mm.

4. Procédé de fabrication d'un échangeur de chaleur selon la revendication 1, **caractérisé en ce qu'**une bande de matériau au titane est plaquée d'une bande de matériau au cuivre et, à partir de la bande composite ainsi obtenue, on façonne des plaques ou tubes, et on les assemble en échangeurs de chaleur, dans lequel la bande composite est soumise à un traitement thermique avant ou après façonnage en plaques ou tubes, pour former une couche limite d'alliage entre les deux matériaux.

5. Procédé de fabrication d'un échangeur de chaleur selon la revendication 4, **caractérisé en ce que** le traitement thermique se fait dans une atmosphère de gaz inerte à une température de 800 °C à 1000 °C.

6. Procédé de fabrication d'un échangeur de chaleur selon la revendication 4 ou 5, **caractérisé en ce que** le traitement thermique est effectué pendant une durée de 5 à 15 minutes.

7. Procédé de fabrication d'un échangeur de chaleur selon l'une des revendications 4 à 6, **caractérisé en ce que** le traitement thermique de la bande composite est effectué en continu.
